# EUROPEAN PATENT SPECIFICATION

(11) **EP 4 583 524 B1**
(45) Date of publication and mention of the grant of the patent: **14.10.2026**
(21) Application number: 24861807.6
(22) Date of filing: 16.08.2024
(51) Int. Cl.: H04N 23/62, G11B 27/031, H04N 5/265

(54) **PHOTOGRAPHY METHOD, ELECTRONIC DEVICE, AND COMPUTER-READABLE MEDIUM**
FOTOGRAFIEVERFAHREN, ELEKTRONISCHE VORRICHTUNG UND COMPUTERLESBARES MEDIUM
PROCÉDÉ DE PHOTOGRAPHIE, DISPOSITIF ÉLECTRONIQUE ET SUPPORT LISIBLE PAR ORDINATEUR

(30) Priority: 08.09.2023 CN 202311159816
(43) Date of publication of application: 09.07.2025
(73) Proprietor: ZTE CORPORATION, Shenzhen, Guangdong 518057 (CN)
(72) Inventor: LIAO, Yuan, Shenzhen, Guangdong 518057 (CN)
(74) Representative: Canzler & Bergmeier Patentanwälte Partnerschaft mbB
(86) International application number: PCT/CN2024/112708
(87) International publication number: WO 2025/050963

(56) References cited:
- EP-A1- 3 910 631
- WO-A1-2020/010818
- CN-A- 109 068 166
- CN-A- 109 451 245
- CN-A- 112 188 307
- CN-A- 114 401 368
- CN-A- 115 515 006
- US-A1- 2016 065 880
- US-A1- 2017 236 551
- US-A1- 2019 355 337

## Description

### TECHNICAL FIELD

Embodiments of the present disclosure relate to, but are not limited to, the technical field of audio and video processing.

### BACKGROUND

At present, when shooting videos with a camera, interaction with a video shot in last second or a video shot at a different time in a different space can be hardly realized without using video editing software. Even if a video with a demand for rhythm and melody is synthesize using the video editing software, the obtained effect is not ideal. EP 3 910 631 A1 discloses music-video collaborations based on synchronised clips sharing common musical timing. US 2019/0355337 A1 discloses karaoke-style audiovisual capture using backing tracks and user performance capture, with mixing of performance contributions. US 2017/0236551 A1 discloses generating a music video by selecting an audio track and capturing multiple video takes while the selected audio track is played, wherein portions of the captured video takes are combined with the selected audio track.

### SUMMARY

The embodiments of the present disclosure provide a shooting method, an electronic device, and a computer readable medium.

In a first aspect, an embodiment of the present disclosure provides a shooting method, including: in a case where an instruction to start shooting is received, reading and playing basic accompaniment audio, and shooting a 1^{st} video; separating video frames of the 1^{st} video and audio of the 1^{st} video from the 1^{st} video; in a case where an instruction to continue shooting is received, playing audio of an i^{th} video, and shooting an (i+1)^{th} video; separating video frames of the (i+1)^{th} video and audio of the (i+1)^{th} video from the (i+1)^{th} video, wherein i is any integer greater than or equal to 1 and less than N, and N is a number of videos to be shot; in a case where an instruction to finish shooting is received, displaying the video frames of the 1^{st} video to the video frames of the N^{th} video on a display screen, and receiving layout adjustment parameters for the displayed frames of the N videos on the display screen; and storing the video frames of the 1^{st} video to the video frames of the N^{th} video and audio of the N^{th} video as a target video according to the layout adjustment parameters.

In a second aspect, an embodiment of the present disclosure provides an electronic device, including: at least one processor; and a storage device having stored thereon at least one program which, when executed by the at least one processor, implements the shooting method described herein.

In a third aspect, an embodiment of the present disclosure provides a computer readable medium having stored thereon a computer program which, when executed by a processor, implements the shooting method described herein.

### BRIEF DESCRIPTION OF DRAWINGS

FIG. 1 is a flowchart illustrating a shooting method according to an embodiment of the present disclosure;
FIG. 2(a) is a schematic diagram of an initial page according to an embodiment of the present disclosure;
FIG. 2(b) is a schematic diagram of a setup page according to an embodiment of the present disclosure;
FIG. 2(c) is a schematic diagram of a shooting page according to an embodiment of the present disclosure;
FIG. 2(d) is a schematic diagram of a countdown in a shooting page according to an embodiment of the present disclosure;
FIG. 2(e) is a schematic diagram illustrating a countdown process when the shooting of a performance video is ended according to an embodiment of the present disclosure;
FIG. 2(f) is a schematic diagram of a display page after the shooting of a performance video is ended according to an embodiment of the present disclosure;
FIG. 2(g) is a schematic diagram of a preview interface according to an embodiment of the present disclosure;
FIG. 2(h) is a schematic diagram illustrating deletion of a 2^{nd} performance video according to an embodiment of the present disclosure;
FIG. 2(i) is a schematic diagram of a grid layout according to an embodiment of the present disclosure;
FIG. 2(j) is a schematic diagram of a vertical layout according to an embodiment of the present disclosure;
FIG. 2(k) is a schematic diagram of a custom layout according to an embodiment of the present disclosure; and
FIG. 3 is a block diagram of an electronic device according to another embodiment of the present disclosure.

### DETAIL DESCRIPTION OF EMBODIMENTS

In order to enable those of ordinary skill in the art to better understand the technical solutions of the present disclosure, a shooting method, an electronic device, and a computer readable medium provided in the present disclosure are described in detail below with reference to the drawings.

Exemplary embodiments of the present disclosure will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features therein can be combined with one another if no conflict is incurred.

The term "and/or" used herein includes any and all combinations of at least one associated listed item.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of at least one other feature, integer, operation, element, component and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

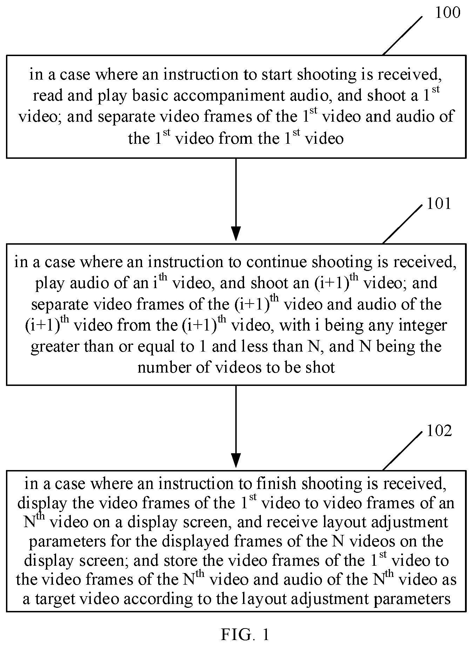

FIG. 1 is a flowchart illustrating a shooting method according to an embodiment of the present disclosure.

In a first aspect, referring to FIG. 1, an embodiment of the present disclosure provides a shooting method, which may include operations 100 to 102.

At operation 100, in a case where an instruction to start shooting is received, basic accompaniment audio is read and played, and a 1^{st} video is shot; and video frames of the 1^{st} video and audio of the 1^{st} video are separated from the 1^{st} video.

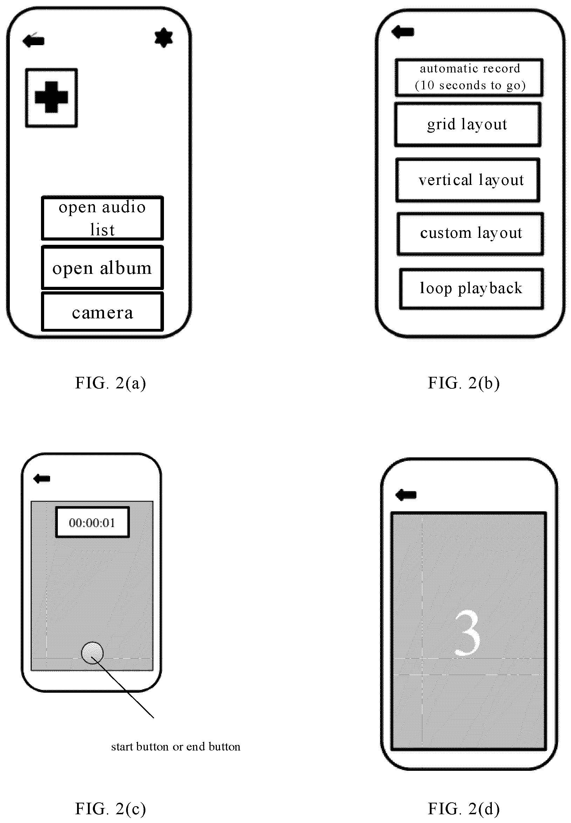

In some exemplary embodiments, before receiving the instruction to start shooting, the method further includes: in a case where an instruction to shoot a synthesized video is received, displaying at least one control for acquiring the basic accompaniment audio; receiving a selection instruction for the control for acquiring the basic accompaniment audio, and turning on a camera to shoot a basic video in a case where the control for acquiring the basic accompaniment audio corresponding to the selection instruction is shooting with camera; and separating audio of the basic video from the basic video, and taking the audio of the basic video as the basic accompaniment audio. As shown in FIG. 2(a), a user may enter a shooting page of the basic video by clicking on the control "camera".

In some exemplary embodiments, before receiving the instruction to start shooting, the method further includes: in a case where an instruction to shoot a synthesized video is received, displaying at least one control for acquiring the basic accompaniment audio; receiving a selection instruction for the control for acquiring the basic accompaniment audio, and selecting a video from an album in a case where the control for acquiring the basic accompaniment audio corresponding to the selection instruction is acquiring from album; and separating audio of the selected video from the selected video, and taking the audio of the selected video as the basic accompaniment audio. As shown in FIG. 2(a), a user may enter an album page by clicking on the control "open album".

In some exemplary embodiments, before receiving the instruction to start shooting, the method further includes: in a case where an instruction to shoot a synthesized video is received, displaying at least one control for acquiring the basic accompaniment audio; receiving a selection instruction for the control for acquiring the basic accompaniment audio, opening an audio list on a preset path in a case where the control for acquiring the basic accompaniment audio corresponding to the selection instruction is acquiring from audio list, and taking a selected audio file as the basic accompaniment audio. As shown in FIG. 2(a), a user may enter a display page of the audio list by clicking on the control "open audio list".

In some exemplary embodiments, when being played, the basic accompaniment audio may be played on a loop or not.

In some exemplary embodiments, a purpose of shooting the 1^{st} video while playing the basic accompaniment audio is to shoot the 1^{st} video with the basic accompaniment audio taken as an accompaniment.

In some exemplary embodiments, when the basic accompaniment audio is played on a loop, duration of the 1^{st} video may be manually controlled by a user or may be set in advance.

In some exemplary embodiments, when the basic accompaniment audio is not played on a loop, the duration of the 1^{st} video is the same as duration of the basic accompaniment audio. In this case, when a playback of the basic accompaniment audio ends, the shooting of the 1^{st} video ends automatically.

In some exemplary embodiments, a time interval between a moment when the playback of the basic accompaniment audio is started and a moment when the shooting of the 1^{st} video is started is less than or equal to a preset time interval.

In some exemplary embodiments, in a manual mode, in a case where an instruction to enter a shooting page is received, the shooting page is entered; in a case where the instruction to start shooting is received, the playback of the basic accompaniment audio is started, and the shooting of the 1^{st} video is started; and when an instruction to stop shooting is received or the playback of the basic accompaniment audio ends, the shooting of the 1^{st} video is ended, and the video frames of the 1^{st} video and the audio of the 1^{st} video are separated from the 1^{st} video.

In some exemplary embodiments, as shown in FIG. 2(a), the user may enter a setup page shown in FIG. 2(b) by clicking on an asterisk, and may set to adopt the manual mode or an automatic mode in the setup page, and if the user selects "automatic record" shown in FIG. 2(b), the automatic mode is adopted; and if the user selects "manual record" (not shown in FIG. 2(b)), the manual mode is adopted.

In some exemplary embodiments, the user may input the instruction to enter the shooting page by clicking on the sign "+" on a current display page, as shown in FIG. 2(a).

In some exemplary embodiments, the user may input the instruction to start shooting by clicking on a start button on the shooting page, and may input an instruction to end shooting by clicking on an end button on the shooting page, as shown in FIG. 2(c).

In some exemplary embodiments, in a case where the instruction to start shooting is received, a countdown begins, and the playback of the basic accompaniment audio and the shooting of the 1^{st} video are started after the countdown ends.

In some exemplary embodiments, in the automatic mode, in a case where the instruction to enter the shooting page is received, the shooting page is entered and a countdown begins, as shown in FIG. 2(d); in a case where the countdown ends, the playback of the basic accompaniment audio and the shooting of the 1^{st} video are started; and in a case where the playback of the basic accompaniment audio ends or the instruction to stop shooting is received, the shooting of the 1^{st} video is ended.

In some exemplary embodiments, a countdown may begin before the playback of the basic accompaniment audio ends, and the shooting of the 1^{st} video is ended when the countdown ends.

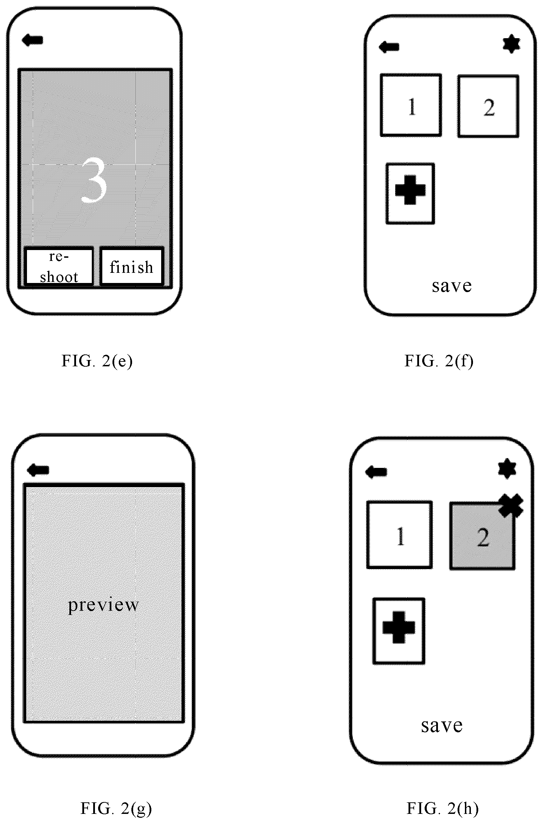

In some exemplary embodiments, a countdown begins when the shooting of the 1^{st} video is ended, as shown in FIG. 2(e), and a 2^{nd} video is shot after the countdown ends.

In some exemplary embodiments, a time length for the countdown may be set in advance.

In some exemplary embodiments, other special effects may be added during the countdown, such as at least one of sound of a tap of cymbals of a drum kit or an animation of a countdown digital screen stretching from a center point to all sides.

In some exemplary embodiments, during the countdown which begins when the shooting of the 1^{st} video is ended, a re-shoot button and a finish button are displayed at the bottom of a shooting screen, as shown in FIG. 2(e), and if the 1^{st} video needs to be re-shot, the user may input a re-shoot instruction by clicking on the re-shoot button; and if the 1^{st} video does not need to be re-shot, the user may input a shooting completion instruction by clicking on the finish button.

In some exemplary embodiments, the re-shoot instruction is received, the video frames of the 1^{st} video and the audio of the 1^{st} video separated from the 1^{st} video are deleted, and the operation of reading and playing the basic accompaniment audio and shooting the 1^{st} video is performed again.

In some exemplary embodiments, the shooting completion instruction is received, and the video frames of the 1^{st} video and the audio of the 1^{st} video separated from the 1^{st} video are stored.

At operation 101, in a case where an instruction to continue shooting is received, audio of an i^{th} video is played, and an (i+1)^{th} video is shot; and video frames of the (i+1)^{th} video and audio of the (i+1)^{th} video are separated from the (i+1)^{th} video, with i being any integer greater than or equal to 1 and less than N, and N being the number of videos to be shot.

In some exemplary embodiments, when being played, the audio of the i^{th} video is not played on a loop.

In some exemplary embodiments, a purpose of shooting the (i+1)^{th} video while playing the audio of the i^{th} video is to shoot the (i+1)^{th} video with the audio of the i^{th} video taken as an accompaniment.

In some exemplary embodiments, duration of the (i+1)^{th} video is the same as that of the i^{th} video.

In some exemplary embodiments, a time interval between a moment when a playback of the audio of the i^{th} video is started and a moment when the shooting of the (i+1)^{th} video is started is less than or equal to a preset time interval.

**In** some exemplary embodiments, in the manual mode, after the shooting of the i'^{h} video is ended, a display page shown in FIG. 2(f) is returned to, and when the user clicks on a save button, the i^{th} video is generated, and a box of a number "i" is displayed, as shown in FIG. 2(f), with the box of the number "1" in FIG. 2(f) representing the 1^{st} video and the box of the number "2" in FIG. 2(f) representing the 2^{nd} video; the video frames of the i^{th} video and the audio of the i^{th} video are separated from the i^{th} video and are stored; when the instruction to enter the shooting page is received, the shooting page is entered; when the instruction to continue shooting is received, the playback of the audio of the i^{th} video and the shooting of the (i+1)^{th} video are started; and when the instruction to stop shooting is received or the playback of the audio of the i^{th} video ends, the shooting of the (i+1)^{th} video is ended, and the video frames of the (i+1)^{th} video and the audio of the (i+1)^{th} video are separated from the (i+1)^{th} video.

In some exemplary embodiments, the user may input the instruction to enter the shooting page by clicking on the sign "+" on a current display page, as shown in FIG. 2(f).

In some exemplary embodiments, the user may input the instruction to continue shooting by clicking on the start button on the shooting page, and may input the instruction to end shooting by clicking on the end button on the shooting page, as shown in FIG. 2(c).

In some exemplary embodiments, when the instruction to continue shooting is received, a countdown begins, and the playback of the audio of the i^{th} video and the shooting of the (i+1)^{th} video are started after the countdown ends.

In some exemplary embodiments, the user may enter a preview interface shown in FIG. 2(g) by clicking on the box of the number "1" in FIG. 2(f) to preview the 1^{st} video, and may enter the preview interface shown in FIG. 2(g) by clicking on the box of the number "2" in FIG. 2(f) to preview the 2^{nd} video.

In some exemplary embodiments, the user may delete the 2^{nd} video by long pressing the box of the number "2" in FIG. 2(f): as shown in FIG. 2(h), after the user long presses the box of the number "2" in FIG. 2(f), a sign "×" appears in the upper right corner of the box of the number "2", and the user may delete the 2^{nd} video by clicking on the sign "×".

In some exemplary embodiments, in the automatic mode, after the shooting of the i^{th} video is ended, the display page shown in FIG. 2(f) is returned to, and when the user clicks on the save button, the i^{th} video is generated, as shown in FIG. 2(f), with the box of the number "1" in FIG. 2(f) representing the 1^{st} video and the box of the number "2" in FIG. 2(f) representing the 2^{nd} video; the video frames of the i^{th} video and the audio of the i^{th} video are separated from the i^{th} video and are stored; and when the instruction to enter the shooting page is received, the shooting page is entered, and a countdown begins, for example, for the (i+1)^{th} video, the shooting of the (i+1)^{th} video is ended when the playback of the audio of the i^{th} video ends or the instruction to stop shooting is received.

In some exemplary embodiments, a countdown may begin before the playback of the audio of the i^{th} video ends, and the shooting of the (i+1)^{th} video is ended when the countdown ends.

In some exemplary embodiments, a countdown begins when the shooting of the (i+1)^{th} video is ended, as shown in FIG. 2(e), and an (i+2)^{th} video is shot after the countdown ends.

In some exemplary embodiments, a time length for the countdown may be set in advance.

In some exemplary embodiments, other special effects may be added during the countdown, such as at least one of sound of a tap of cymbals of a drum kit or an animation of a countdown digital screen stretching from a center point to all sides.

In some exemplary embodiments, during the countdown which begins when the shooting of the (i+1)^{th} video is ended, the re-shoot button and the finish button are displayed at the bottom of a shooting screen, as shown in FIG. 2(e), and if the (i+1)^{th} video needs to be re-shot, the user may input the re-shoot instruction by clicking on the re-shoot button; and if the (i+1)^{th} video does not need to be re-shot, the user may input the shooting completion instruction by clicking on the finish button.

In some exemplary embodiments, the re-shoot instruction is received, the video frames of the (i+1)^{th} video and the audio of the (i+1)^{th} video separated from the (i+1)^{th} video are deleted, and the operation of shooting the (i+1)^{th} video while playing the audio of the i^{th} video is performed again.

In some exemplary embodiments, the shooting completion instruction is received, and the video frames the (i+1)^{th} video and the audio of the (i+1)^{th} video separated from the (i+1)^{th} video are stored.

At operation 102, in a case where an instruction to finish shooting is received, the video frames of the 1^{st} video to the video frames of the N^{th} video are displayed on a display screen, and layout adjustment parameters for the displayed frames of the N videos on the display screen are received; and the video frames of the 1^{st} video to the video frames of the N^{th} video and audio of the N^{th} video are stored as a target video according to the layout adjustment parameters.

In some exemplary embodiments, storing the video frames of the 1^{st} video to the video frames of the N^{th} video and the audio of the N^{th} video as the target video according to the layout adjustment parameters includes: storing video frames corresponding to the basic accompaniment audio, the video frames of the 1^{st} video to the video frames of the N^{th} video, and the audio of the N^{th} video as the target video according to the layout adjustment parameters.

In some exemplary embodiments, the video frames corresponding to the basic accompaniment audio may be separated from a basic performance video.

In some exemplary embodiments, the video frames corresponding to the basic accompaniment audio may be separated from the selected video.

In some exemplary embodiments, duration of the target video is a minimum value among the duration of the 1^{st} video to duration of the N^{th} video.

In some exemplary embodiments, the 1^{st} video to the N^{th} video are performance videos of N different instruments, or performance videos of (N-1) different instruments and a singing video.

In some exemplary embodiments, the 1^{st} video to the N^{th} video are performance videos of N different scenes, or performance videos of (N-1) different scenes and a singing video.

In some exemplary embodiments, when the target video is synthesized, the video frames of the 1^{st} video to the video frames of the N^{th} video may be laid out in any one layout mode including a grid layout, a vertical layout, and a custom layout, and the layout adjustment parameters are layout adjustment parameters corresponding to the layout modes.

**In** some exemplary embodiments, when the target video is synthesized, the video frames corresponding to the basic accompaniment audio, and the video frames of the 1^{st} video to the video frames of the N^{th} video may be laid out in any one layout mode including a grid layout, a vertical layout, and a custom layout, and the layout adjustment parameters are layout adjustment parameters corresponding to the layout modes.

**In** some exemplary embodiments, the layout mode may be set in advance in the setup page shown in FIG. 2(b).

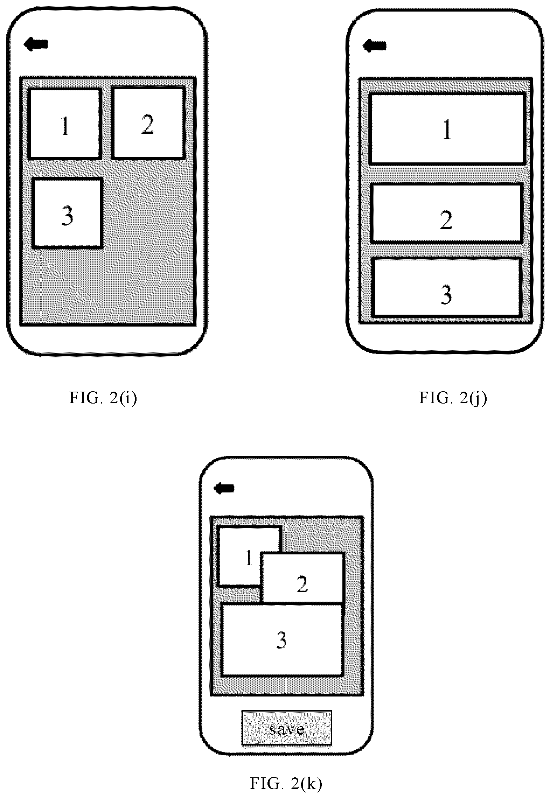

**In** some exemplary embodiments, the grid layout is to arrange in two columns, so as to facilitate comparison during displaying of two adjacent video frames, as shown in FIG. 2(i).

**In** some exemplary embodiments, the vertical layout is to arrange from top to bottom, as shown in FIG. 2(j). A width of a video playback region in the vertical layout is larger than that of a video playback region in the grid layout, so that the video content may be presented more completely. A composite width is based on the width of the video playback region, and a composite height is equal to a result of dividing a height of the video playback region by the number of videos.

**In** some exemplary embodiments, the custom layout is not limited to a video playback region, as shown in FIG. 2(k). The user may manually drag a video to change a location of the video, and may also press and hold a border of a video to change a size of the video. The videos may overlap from top to bottom, and a video in a lower layer may be covered by a video in an upper layer.

**In** some exemplary embodiments, synthesizing the video frames of the 1^{st} video to the video frames of the N^{th} video and the audio of the N^{th} video into the target video according to the layout adjustment parameters includes: respectively decoding the video frames of the 1^{st} video to the video frames of the N^{th} video to obtain corresponding data in YUV format, scaling each frame of the data in the YUV format according to the layout adjustment parameters, and drawing the scaled data in the YUV format in a corresponding video playback region in a set layout mode to obtain first synthesized video frames; and decoding the audio of the N^{th} video, and mixing and aligning the first synthesized video frames and the decoded audio to obtain the target video.

In some exemplary embodiments, synthesizing the video frames corresponding to the basic accompaniment audio, the video frames of the 1^{st} video to the video frames of the N^{th} video, and the audio of the N^{th} video into the target video according to the layout adjustment parameters includes: respectively decoding the video frames corresponding to the basic accompaniment audio, and the video frames of the 1^{st} video to the video frames of the N^{th} video to obtain corresponding data in YUV format, scaling each frame of the data in the YUV format according to the layout adjustment parameters, and drawing the scaled data in the YUV format in a corresponding video playback region in a set layout mode to obtain second synthesized video frames; and decoding the audio of the N^{th} video, and mixing and aligning the second synthesized video frames and the decoded audio to obtain the target video.

For example, if the user desires to shoot a multi-view video of himself playing the drum, playing the piano, and singing, the user may adopt the shooting method provided in the embodiments of the present disclosure, that is, the user may shoot a drum performance video with the camera to obtain VideoA1, and then separate video frames VideoA2 and audio AudioA from the drum performance video VideoA1.

In a case where the audio AudioA of the drum performance video VideoA1 is played as an accompaniment, a piano performance video is shot to obtain VideoB 1, and video frames VideoB2 and audio AudioB are separated from the piano performance video VideoB1. Here, the audio AudioB contains the sound of the drum and the sound of the piano.

In a case where the audio AudioB of the piano performance video VideoB 1 is played as an accompaniment, a singing video is shot to obtain VideoC1, and video frames VideoC2 and audio AudioC are separated from the singing video VideoC1. Here, the audio AudioC contains the sound of the drum, the sound of the piano, and the sound of the singing.

Finally, the video frames VideoA2, the video frames VideoB2, the video frames VideoC2, and the audio AudioC are synthesized into a multi-view performance video of the user playing the drum, playing the piano, and singing.

According to the shooting method provided in the embodiments of the present disclosure, the N videos are shot, the audio of the i^{th} video is played as the accompaniment when the (i+1)^{th} video is shot, and the shot N videos and the audio of the N^{th} video are finally synthesized into the target video. In this way, the problems of users' lack of video editing technology and troublesome mutli-file synthesis and management are solved, a video synthesis effect is improved, and the shooting method is applicable to multi-video synthesis scenarios such as shooting of practice videos of playing a musical instrument or singing.

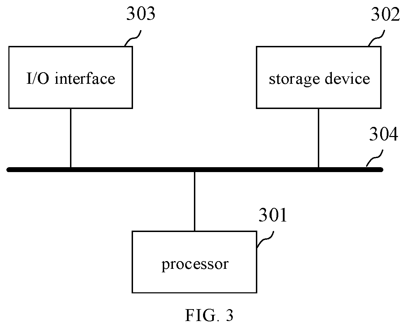

In a second aspect, as shown in FIG. 3, another embodiment of the present disclosure provides an electronic device, including: at least one processor 301; and a storage device 302 having stored thereon at least one program which, when executed by the at least one processor 301, implements the shooting method described in any one of the above embodiments of the present disclosure.

In some exemplary embodiments, the electronic device further includes one or more input/output (I/O) interfaces 303, which is connected between the processor 301 and the storage device 302 and configured to enable information interaction between the processor 301 and the storage device 302.

The processor 301 is a device having data processing capability, and includes, but is not limited to, a Central Processing Unit (CPU); the storage device 302 is a device having data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and the I/O interface (read/write) interface 303 is connected between the processor 301 and the storage device 302, is capable of enabling the information interaction between the processor 301 and the storage device 302, and includes, but is not limited to, a data bus (Bus).

In some embodiments, the processor 301, the storage device 302, and the I/O interface 303 are connected to each other through a bus 304, and then are connected to other components of a computing device.

In a third aspect, another embodiment of the present disclosure provides a computer readable medium having stored thereon a computer program which, when executed by a processor, implements the shooting method described in any one of the above embodiments of the present disclosure.

It should be understood by those of ordinary skill in the art that the functional modules/units in all or some of the operations, systems and devices in the above disclosed method may be implemented as software, firmware, hardware, or suitable combinations thereof. If implemented as hardware, the division between the functional modules/units stated above is not necessarily corresponding to the division of physical components; and for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A shooting method, comprising:
in a case where an instruction to start shooting is received, reading (100) and playing (100) basic accompaniment audio, and shooting (100) a 1^{st} video; and separating (100) video frames of the 1^{st} video and audio of the 1^{st} video from the 1^{st} video;
**characterised in that** the method further comprises:
in a case where an instruction to continue shooting is received, playing (101) audio of an i^{th} video, and shooting (101) an (i+1)^{th} video; and separating (101) video frames of the (i+1)^{th} video and audio of the (i+1)^{th} video from the (i+1)^{th} video, wherein i is any integer greater than or equal to 1 and less than N, and N is a number of videos to be shot; and
in a case where an instruction to finish shooting is received, displaying (102) the video frames of the 1^{st} video to the video frames of the N^{th} video on a display screen, and receiving (102) layout adjustment parameters for the displayed frames of the N videos on the display screen; and storing (102) the video frames of the 1^{st} video to the video frames of the N^{th} video and audio of the N^{th} video as a target video according to the layout adjustment parameters.

2. The shooting method of claim 1, wherein before receiving the instruction to start shooting, the method further comprises:
in a case where an instruction to shoot a synthesized video is received, displaying at least one control for acquiring the basic accompaniment audio;
receiving a selection instruction for the at least one control for acquiring the basic accompaniment audio, and turning on a camera to shoot a basic video in a case where a control for acquiring the basic accompaniment audio corresponding to the selection instruction is shooting with camera; and
separating audio of the basic video from the basic video, and taking the audio of the basic video as the basic accompaniment audio.

3. The shooting method of claim 1, wherein before receiving the instruction to start shooting, the method further comprises:
in a case where an instruction to shoot a synthesized video is received, displaying at least one control for acquiring the basic accompaniment audio;
receiving a selection instruction for the at least one control for acquiring the basic accompaniment audio, and selecting a video from an album in a case where a control for acquiring the basic accompaniment audio corresponding to the selection instruction is acquiring from album; and
separating audio of the selected video from the selected video, and taking the audio of the selected video as the basic accompaniment audio.

4. The shooting method of claim 1, wherein before receiving the instruction to start shooting, the method further comprises:
in a case where an instruction to shoot a synthesized video is received, displaying at least one control for acquiring the basic accompaniment audio; and
receiving a selection instruction for the at least one control for acquiring the basic accompaniment audio, opening an audio list on a preset path in a case where a control for acquiring the basic accompaniment audio corresponding to the selection instruction is acquiring from audio list, and taking a selected audio file as the basic accompaniment audio.

5. The shooting method of any one of claims 1 to 3, wherein storing (102) the video frames of the 1^{st} video to the video frames of the N^{th} video and the audio of the N^{th} video as the target video according to the layout adjustment parameters comprises:
storing video frames corresponding to the basic accompaniment audio, the video frames of the 1^{st} video to the video frames of the N^{th} video, and the audio of the N^{th} video as the target video according to the layout adjustment parameters.

6. The shooting method of any one of claims 1 to 4, wherein duration of the target video is a minimum value among duration of the 1^{st} video to duration of the N^{th} video.

7. The shooting method of any one of claims 1 to 4, wherein in a case where an instruction to stop shooting is received or a playback of the basic accompaniment audio ends, the operation of separating (100) the video frames of the 1^{st} video and the audio of the 1^{st} video from the 1^{st} video is performed; and
in a case where the instruction to stop shooting is received or a playback of the audio of the i^{th} video ends, the operation of separating (101) the video frames of the (i+1)^{th} video and the audio of the (i+1)^{th} video from the (i+1)^{th} video is performed.

8. The shooting method of any one of claims 1 to 4, wherein in a case where the instruction to start shooting is received, a countdown begins, and the operation of reading (100) and playing (100) the basic accompaniment audio and shooting (100) the 1^{st} video is performed after the countdown ends; or
in a case where the instruction to continue shooting is received, a countdown begins, and the operation of playing (101) the audio of the i^{th} video and shooting (101) the (i+1)^{th} video is performed after the countdown ends.

9. An electronic device, comprising:
at least one processor (301); and
a storage device (302) having stored thereon at least one program which, when executed by the at least one processor (301), implements the shooting method of any one of claims 1 to 8.

10. A computer readable medium having stored thereon a computer program which, when executed by a processor, implements the shooting method of any one of claims 1 to 8.

11. The shooting method of any one of claims 1 to 4, further comprising: in a case where a re-shoot instruction is received, deleting the video frames of the 1^{st} video and the audio of the 1^{st} video separated from the 1^{st} video, and performing again reading (100) and playing (100) the basic accompaniment audio and shooting (100) the 1^{st} video.

12. The shooting method of any one of claims 1 to 4, further comprising: in a case where a re-shoot instruction is received, deleting the video frames of the (i+1)^{th} video and the audio of the (i+1)^{th} video separated from the (i+1)^{th} video, and performing again playing (101) the audio of the i^{th} video and shooting (101) the (i+1)^{th} video.

13. The shooting method of any one of claims 1 to 4, wherein the 1^{st} video to the N^{th} video are performance videos of N different instruments or scenes, or performance videos of **(N-1)** different instruments or scenes and a singing video.

14. The shooting method of any one of claims 1 to 4, wherein storing (102) the video frames of the 1^{st} video to the video frames of the N^{th} video and the audio of the N^{th} video as the target video according to the layout adjustment parameters comprises:
respectively decoding the video frames of the 1^{st} video to the video frames of the N^{th} video to obtain corresponding data in YUV format, scaling each frame of the data in the YUV format according to the layout adjustment parameters, and drawing the scaled data in the YUV format in a corresponding video playback region in a set layout mode to obtain first synthesized video frames; and decoding the audio of the N^{th} video, and mixing and aligning the first synthesized video frames and the decoded audio to obtain the target video.

15. The shooting method of claim 5, wherein storing video frames corresponding to the basic accompaniment audio, the video frames of the 1^{st} video to the video frames of the N^{th} video, and the audio of the N^{th} video as the target video according to the layout adjustment parameters comprises:
respectively decoding the video frames corresponding to the basic accompaniment audio, and the video frames of the 1^{st} video to the video frames of the N^{th} video to obtain corresponding data in YUV format, scaling each frame of the data in the YUV format according to the layout adjustment parameters, and drawing the scaled data in the YUV format in a corresponding video playback region in a set layout mode to obtain second synthesized video frames; and decoding the audio of the N^{th} video, and mixing and aligning the second synthesized video frames and the decoded audio to obtain the target video.

## Patentansprüche

1. Aufnahmeverfahren, umfassend:
in einem Fall, in dem eine Anweisung zum Starten des Aufnehmens empfangen wird, Lesen (100) und Abspielen (100) von Basisbegleitaudio und Aufnehmen (100) eines ersten Videos; und Trennen (100) von Video-Einzelbildern des ersten Videos und Audio des ersten Videos von dem ersten Video;
**dadurch gekennzeichnet, dass** das Verfahren ferner umfasst:
in einem Fall, in dem eine Anweisung zum Fortsetzen des Aufnehmens empfangen wird, Abspielen (101) von Audio eines i-ten Videos und Aufnehmen (101) eines (i+1)-ten Videos; und Trennen (101) von Video-Einzelbildern des (i+1)-ten Videos und Audio des (i+1)-ten Videos von dem (i+1)-ten Video, wobei i eine beliebige Ganzzahl größer oder gleich 1 und kleiner als N ist und N eine Anzahl von Videos ist, die aufgenommen werden sollen; und
in einem Fall, in dem eine Anweisung zum Beenden des Aufnehmens empfangen wird, Anzeigen (102) der Video-Einzelbilder des ersten Videos zu den Video-Einzelbildern des N-ten Videos auf einem Anzeigebildschirm und Empfangen (102) von Parametern zur Anpassung des Layouts für die angezeigten Einzelbilder der N Videos auf dem Anzeigebildschirm; und Speichern (102) der Video-Einzelbilder des ersten Videos zu den Video-Einzelbildern des N-ten Videos und Audio des N-ten Videos als ein Zielvideo gemäß den Parametern zur Anpassung des Layouts.

2. Aufnahmeverfahren nach Anspruch 1, wobei das Verfahren vor dem Empfangen der Anweisung zum Starten des Aufnehmens ferner umfasst:
in einem Fall, in dem eine Anweisung zum Aufnehmen eines synthetisierten Videos empfangen wird, Anzeigen mindestens einer Steuerung zum Erfassen des Basisbegleitaudios;
Empfangen einer Auswahlanweisung für die mindestens eine Steuerung zum Erfassen des Basisbegleitaudios und Einschalten einer Kamera, um ein Basisvideo aufzunehmen, in einem Fall, in dem eine Steuerung zum Erfassen des Basisbegleitaudios, das der Auswahlanweisung entspricht, mit einer Kamera aufnimmt; und
Trennen von Audio des Basisvideos von dem Basisvideo und Nehmen des Audios des Basisvideos als das Basisbegleitaudio.

3. Aufnahmeverfahren nach Anspruch 1, wobei das Verfahren vor dem Empfangen der Anweisung zum Starten des Aufnehmens ferner umfasst:
in einem Fall, in dem eine Anweisung zum Aufnehmen eines synthetisierten Videos empfangen wird, Anzeigen mindestens einer Steuerung zum Erfassen des Basisbegleitaudios;
Empfangen einer Auswahlanweisung für die mindestens eine Steuerung zum Erfassen des Basisbegleitaudios und Auswählen eines Videos aus einem Album in einem Fall, in dem eine Steuerung zum Erfassen des Basisbegleitaudios, das der Auswahlanweisung entspricht, aus dem Album erfasst wird; und
Trennen von Audio des ausgewählten Videos von dem ausgewählten Video und Nehmen des Audios des ausgewählten Videos als das Basisbegleitaudio.

4. Aufnahmeverfahren nach Anspruch 1, wobei das Verfahren vor dem Empfangen der Anweisung zum Starten des Aufnehmens ferner umfasst:
in einem Fall, in dem eine Anweisung zum Aufnehmen eines synthetisierten Videos empfangen wird, Anzeigen mindestens einer Steuerung zum Erfassen des Basisbegleitaudios; und
Empfangen einer Auswahlanweisung für die mindestens eine Steuerung zum Erfassen des Basisbegleitaudios, Öffnen einer Audioliste auf einem voreingestellten Pfad in einem Fall, in dem eine Steuerung zum Erfassen des Basisbegleitaudios, das der Auswahlanweisung entspricht, aus der Audioliste erfasst wird, und Nehmen einer ausgewählten Audiodatei als das Basisbegleitaudio.

5. Aufnahmeverfahren nach einem der Ansprüche 1 bis 3, wobei das Speichern (102) der Video-Einzelbilder des ersten Videos zu den Video-Einzelbildern des N-ten Videos und des Audios des N-ten Videos als das Zielvideo gemäß den Parametern zur Anpassung des Layouts umfasst:
Speichern von Video-Einzelbildern, die dem Basisbegleitaudio entsprechen, der Video-Einzelbilder des ersten Videos zu den Video-Einzelbildern des N-ten Videos und des Audios des N-ten Videos als das Zielvideo gemäß den Parametern zur Anpassung des Layouts.

6. Aufnahmeverfahren nach einem der Ansprüche 1 bis 4, wobei die Dauer des Zielvideos ein minimaler Wert zwischen der Dauer des ersten Videos und der Dauer des N-ten Videos ist.

7. Aufnahmeverfahren nach einem der Ansprüche 1 bis 4, wobei in einem Fall, in dem eine Anweisung zum Stoppen des Aufnehmens empfangen wird oder eine Wiedergabe des Basisbegleitaudios endet, der Vorgang des Trennens (100) der Video-Einzelbilder des ersten Videos und des Audios des ersten Videos von dem ersten Video durchgeführt wird; und
in einem Fall, in dem die Anweisung zum Stoppen des Aufnehmens empfangen wird oder eine Wiedergabe des Audios des i-ten Videos endet, der Vorgang des Trennens (101) der Video-Einzelbilder des (i+1)-ten Videos und des Audios des (i+1)-ten Videos von dem (i+1)-ten Video durchgeführt wird.

8. Aufnahmeverfahren nach einem der Ansprüche 1 bis 4, wobei in einem Fall, in dem die Anweisung zum Starten des Aufnehmens empfangen wird, ein Countdown beginnt und der Vorgang des Lesens (100) und Abspielens (100) des Basisbegleitaudios und des Aufnehmens (100) des ersten Videos nach dem Ende des Countdowns durchgeführt wird; oder
in einem Fall, in dem die Anweisung zum Fortsetzen des Aufnehmens empfangen wird, ein Countdown beginnt und der Vorgang des Abspielens (101) des Audios des i-ten Videos und des Aufnehmens (101) des (i+1)-ten Videos nach dem Ende des Countdowns durchgeführt wird.

9. Elektronisches Gerät, umfassend:
mindestens einen Prozessor (301); und
eine Speichervorrichtung (302), auf der mindestens ein Programm gespeichert ist, das, wenn es von dem mindestens einen Prozessor (301) ausgeführt wird, das Verfahren zum Aufnehmen nach einem der Ansprüche 1 bis 8 implementiert.

10. Computerlesbares Medium, auf dem ein Computerprogramm gespeichert ist, das, wenn es von einem Prozessor ausgeführt wird, das Verfahren zum Aufnehmen nach einem der Ansprüche 1 bis 8 implementiert.

11. Aufnahmeverfahren nach einem der Ansprüche 1 bis 4, ferner umfassend: in einem Fall, in dem eine Anweisung zum erneuten Aufnehmen empfangen wird, Löschen der Video-Einzelbilder des ersten Videos und des Audios des ersten Videos, das von dem ersten Video getrennt wurde, und erneutes Durchführen des Lesens (100) und Abspielens (100) des Basisbegleitaudios und des Aufnehmens (100) des ersten Videos.

12. Aufnahmeverfahren nach einem der Ansprüche 1 bis 4, ferner umfassend: in einem Fall, in dem eine Anweisung zum erneuten Aufnehmen empfangen wird, Löschen der Video-Einzelbilder des (i+1)-ten Videos und des Audios des (i+1)-ten Videos, das von dem (i+1)-ten Video getrennt wurde, und erneutes Durchführen des Abspielens (101) des Audios des i-ten Videos und des Aufnehmens (101) des (i+1)-ten Videos.

13. Aufnahmeverfahren nach einem der Ansprüche 1 bis 4, wobei das erste Video bis das N-te Video Ausführungsvideos von N verschiedenen Instrumenten oder Szenen oder Ausführungsvideos von (N-1) verschiedenen Instrumenten oder Szenen und ein Gesangsvideo sind.

14. Aufnahmeverfahren nach einem der Ansprüche 1 bis 4, wobei das Speichern (102) der Video-Einzelbilder des ersten Videos zu den Video-Einzelbildern des N-ten Videos und des Audios des N-ten Videos als das Zielvideo gemäß den Parametern zur Anpassung des Layouts umfasst:
jeweiliges Decodieren der Video-Einzelbilder des ersten Videos zu den Video-Einzelbildern des N-ten Videos, um entsprechende Daten im YUV-Format zu erhalten, Skalieren jedes Einzelbildes der Daten im YUV-Format gemäß den Parametern zur Anpassung des Layouts und Zeichnen der skalierten Daten im YUV-Format in einem entsprechenden Video-Wiedergabebereich in einem eingestellten Layout-Modus, um erste synthetisierte Video-Einzelbilder zu erhalten; und Decodieren des Audios des N-ten Videos und Mischen und Ausrichten der ersten synthetisierten Video-Einzelbilder und des decodierten Audios, um das Zielvideo zu erhalten.

15. Aufnahmeverfahren nach Anspruch 5, wobei das Speichern von Video-Einzelbildern, die dem Basisbegleitaudio entsprechen, der Video-Einzelbilder des ersten Videos zu den Video-Einzelbildern des N-ten Videos und des Audios des N-ten Videos als das Zielvideo gemäß den Parametern zur Anpassung des Layouts umfasst:
jeweiliges Decodieren der Video-Einzelbilder, die dem Basisbegleitaudio entsprechen, und der Video-Einzelbilder des ersten Videos zu den Video-Einzelbildern des N-ten Videos, um entsprechende Daten im YUV-Format zu erhalten, Skalieren jedes Einzelbildes der Daten im YUV-Format gemäß den Parametern zur Anpassung des Layouts und Zeichnen der skalierten Daten im YUV-Format in einem entsprechenden Video-Wiedergabebereich in einem eingestellten Layout-Modus, um zweite synthetisierte Video-Einzelbilder zu erhalten; und Decodieren des Audios des N-ten Videos und Mischen und Ausrichten der zweiten synthetisierten Video-Einzelbilder und des decodierten Audios, um das Zielvideo zu erhalten.

## Revendications

1. Procédé de photographie, comprenant :
dans le cas où une instruction pour démarrer la photographie est reçue, lire (100) et dérouler (100) de l'audio d'accompagnement de base, et photographier (100) une 1^{ère} vidéo ; et séparer (100) des images vidéo de la 1^{ère} vidéo et de l'audio de la 1^{ère} vidéo de la 1^{ère} vidéo ;
**caractérisé en ce que** le procédé comprend en outre :
dans le cas où une instruction pour continuer la photographie est reçue, dérouler (101) de l'audio d'une i-ième vidéo, et photographier (101) une (i+1)-ième vidéo ; et séparer (101) des images vidéo de la (i+1)-ième vidéo et de l'audio de la (i+1)-ième vidéo de la (i+1)-ième vidéo, où i est un entier quelconque supérieur ou égal à 1 et inférieur à N, et N est un nombre de vidéos à photographier ; et
dans le cas où une instruction pour terminer la photographie est reçue, afficher (102) les images vidéo de la 1^{ère} vidéo sur les images vidéo de la N-ième vidéo sur un écran d'affichage, et recevoir (102) des paramètres d'ajustement de mise en page pour les images affichées des N vidéos sur l'écran d'affichage ; et stocker (102) les images vidéo de la 1^{ère} vidéo sur les images vidéo de la N-ième vidéo et de l'audio de la N-ième vidéo en tant que vidéo cible selon les paramètres d'ajustement de mise en page.

2. Procédé de photographie selon la revendication 1, dans lequel avant de recevoir l'instruction pour démarrer la photographie, le procédé comprend en outre :
dans le cas où une instruction pour photographier une vidéo synthétisée est reçue, afficher au moins un contrôle pour acquérir l'audio d'accompagnement de base ;
recevoir une instruction de sélection pour l'au moins un contrôle pour acquérir l'audio d'accompagnement de base, et activer une caméra pour photographier une vidéo de base dans le cas où un contrôle pour acquérir l'audio d'accompagnement de base correspondant à l'instruction de sélection photographie avec une caméra ; et
séparer l'audio de la vidéo de base de la vidéo de base, et prendre l'audio de la vidéo de base en tant qu'audio d'accompagnement de base.

3. Procédé de photographie selon la revendication 1, dans lequel avant de recevoir l'instruction pour démarrer la photographie, le procédé comprend en outre :
dans le cas où une instruction pour photographier une vidéo synthétisée est reçue, afficher au moins un contrôle pour acquérir l'audio d'accompagnement de base ;
recevoir une instruction de sélection pour l'au moins un contrôle pour acquérir l'audio d'accompagnement de base, et sélectionner une vidéo à partir d'un album dans le cas où un contrôle pour acquérir l'audio d'accompagnement de base correspondant à l'instruction de sélection est une acquisition à partir d'un album ; et
séparer l'audio de la vidéo sélectionnée de la vidéo sélectionnée, et prendre l'audio de la vidéo sélectionnée en tant qu'audio d'accompagnement de base.

4. Procédé de photographie selon la revendication 1, dans lequel avant de recevoir l'instruction pour démarrer la photographie, le procédé comprend en outre :
dans le cas où une instruction pour photographier une vidéo synthétisée est reçue, afficher au moins un contrôle pour acquérir l'audio d'accompagnement de base ; et
recevoir une instruction de sélection pour l'au moins un contrôle pour acquérir l'audio d'accompagnement de base, ouvrir une liste d'audio sur un trajet prédéfini dans le cas où un contrôle pour acquérir l'audio d'accompagnement de base correspondant à l'instruction de sélection est une acquisition à partir d'une liste d'audio, et prendre un fichier audio sélectionné en tant qu'audio d'accompagnement de base.

5. Procédé de photographie selon l'une quelconque des revendications 1 à 3, dans lequel le stockage (102) des images vidéo de la 1^{ère} vidéo sur les images vidéo de la N-ième vidéo et de l'audio de la N-ième vidéo en tant que vidéo cible selon les paramètres d'ajustement de mise en page comprend :
stocker des images vidéo correspondant à l'audio d'accompagnement de base, les images vidéo de la 1^{ère} vidéo sur les images vidéo de la N-ième vidéo, et l'audio de la N-ième vidéo en tant que vidéo cible selon les paramètres d'ajustement de mise en page.

6. Procédé de photographie selon l'une quelconque des revendications 1 à 4, dans lequel la durée de la vidéo cible est une valeur minimale entre la durée de la 1^{ère} vidéo et la durée de la N-ième vidéo.

7. Procédé de photographie selon l'une quelconque des revendications 1 à 4, dans lequel dans le cas où une instruction pour arrêter la photographie est reçue ou une lecture de l'audio d'accompagnement de base se termine, l'opération consistant à séparer (100) les images vidéo de la 1^{ère} vidéo et l'audio de la 1^{ère} vidéo de la 1^{ère} vidéo est réalisée ; et
dans le cas où l'instruction pour arrêter la photographie est reçue ou une lecture de l'audio de la i-ième vidéo se termine, l'opération consistant à séparer (101) les images vidéo de la (i+1)-ième vidéo et l'audio de la (i+1)-ième vidéo de la (i+1)-ième vidéo est réalisée.

8. Procédé de photographie selon l'une quelconque des revendications 1 à 4, dans lequel dans le cas où l'instruction pour démarrer la photographie est reçue, un compte à rebours commence, et l'opération consistant à lire (100) et dérouler (100) l'audio d'accompagnement de base et photographier (100) la 1^{ère} vidéo est réalisée après que le compte à rebours se termine ; ou
dans le cas où l'instruction pour continuer la photographie est reçue, un compte à rebours commence, et l'opération consistant à dérouler (101) l'audio de la i-ième vidéo et photographier (101) la (i+1)-ième vidéo est réalisée après que le compte à rebours se termine.

9. Dispositif électronique, comprenant :
au moins un processeur (301) ; et
un dispositif de stockage (302) sur lequel est stocké au moins un programme qui, lorsqu'il est exécuté par l'au moins un processeur (301), met en œuvre le procédé de photographie selon l'une quelconque des revendications 1 à 8.

10. Moyen lisible par ordinateur sur lequel est stocké un programme informatique qui, lorsqu'il est exécuté par un processeur, met en œuvre le procédé de photographie selon l'une quelconque des revendications 1 à 8.

11. Procédé de photographie selon l'une quelconque des revendications 1 à 4, comprenant en outre : dans le cas où une instruction de rephotographie est reçue, supprimer les images vidéo de la 1^{ère} vidéo et l'audio de la 1^{ère} vidéo séparée de la 1^{ère} vidéo, et réaliser à nouveau la lecture (100) et le déroulement (100) de l'audio d'accompagnement de base et photographier (100) la 1^{ère} vidéo.

12. Procédé de photographie selon l'une quelconque des revendications 1 à 4, comprenant en outre : dans le cas où une instruction de rephotographie est reçue, supprimer les images vidéo de la (i+1)-ième vidéo et l'audio de la (i+1)-ième vidéo séparée de la (i+1)-ième vidéo, et réaliser à nouveau le déroulement (101) de l'audio de la i-ième vidéo et la photographie (101) de la (i+1)-ième vidéo.

13. Procédé de photographie selon l'une quelconque des revendications 1 à 4, dans lequel la 1^{ère} vidéo sur la N-ième vidéo sont des vidéos de performance de N instruments ou scènes différents, ou des vidéos de performance de (N-1) instruments ou scènes différents et une vidéo de chant.

14. Procédé de photographie selon l'une quelconque des revendications 1 à 4, dans lequel le stockage (102) des images vidéo de la 1^{ère} vidéo sur les images vidéo de la N-ième vidéo et de l'audio de la N-ième vidéo en tant que vidéo cible selon les paramètres d'ajustement de mise en page comprend :
décoder respectivement les images vidéo de la 1^{ère} vidéo sur les images vidéo de la N-ième vidéo pour obtenir des données correspondantes dans un format YUV, mettre à l'échelle chaque trame des données dans le format YUV selon les paramètres d'ajustement de mise en page, et dessiner les données mises à l'échelle dans le format YUV dans une région de lecture vidéo correspondante dans un mode de mise en page défini pour obtenir des premières images vidéo synthétisées ; et décoder l'audio de la N-ième vidéo, et mélanger et aligner les premières images vidéo synthétisées et l'audio décodé pour obtenir la vidéo cible.

15. Procédé de photographie selon la revendication 5, dans lequel le stockage des images vidéo correspondant à l'audio d'accompagnement de base, les images vidéo de la 1^{ère} vidéo sur les images vidéo de la N-ième vidéo, et l'audio de la N-ième vidéo en tant que vidéo cible selon les paramètres d'ajustement de mise en page comprend :
décoder respectivement les images vidéo correspondant à l'audio d'accompagnement de base, et les images vidéo de la 1^{ère} vidéo sur les images vidéo de la N-ième vidéo pour obtenir des données correspondantes dans un format YUV, mettre à l'échelle chaque trame des données dans le format YUV selon les paramètres d'ajustement de mise en page, et dessiner les données mises à l'échelle dans le format YUV dans une région de lecture vidéo correspondante dans un mode de mise en page défini pour obtenir des secondes images vidéo synthétisées ; et décoder l'audio de la N-ième vidéo, et mélanger et aligner les secondes images vidéo synthétisées et l'audio décodé pour obtenir la vidéo cible.
